# EUROPÄISCHE PATENTANMELDUNG

(11) **EP 4 647 372 A1**
(43) Veröffentlichungstag der Anmeldung: **12.11.2025**
(21) Anmeldenummer: 25174688.9
(22) Anmeldetag: 07.05.2025
(51) Int. Cl.: B65G 47/90, B25J 15/00, B65G 57/03, B65G 59/02, B65G 61/00

(54) **ABHEBEVORRICHTUNG**

(30) Priorität: 08.05.2024 DE 102024112990
(71) Anmelder: Safelog GmbH, 85570 Markt Schwaben (DE)
(72) Erfinder: Wolter, Michael, 85570 Markt Schwaben (DE); Wagner, Marcel, 85570 Markt Schwaben (DE)
(74) Vertreter: Grättinger Möhring von Poschinger Patentanwälte Partnerschaft mbB

(57) **Zusammenfassung**

Die vorliegende Erfindung betrifft eine Abhebevorrichtung (3), geeignet um aufeinandergestapelte Transportbehälter (17) abzuheben und abzusetzen, umfassend eine Greifvorrichtung (5), und eine Gegenhaltevorrichtung (6). Bei geeigneter Positionierung der Abhebevorrichtung (3) ist ein aufzunehmender Transportbehälter (17) oder Transportbehälterstapel zwischen der Greifvorrichtung (5) und der Gegenhaltevorrichtung (6) positionierbar ist. Die Gegenhaltevorrichtung (6) weist an ihrer der Greifvorrichtung (5) zugewandten Seite ein Kissen (13) auf, welches durch Zufuhr eines Fluids expandierbar und durch Abfuhr des Fluids kontrahierbar ist.

## Beschreibung

Die vorliegende Erfindung betrifft eine Abhebevorrichtung geeignet um aufeinandergestapelte Transportbehälter abzuheben und abzusetzen.

Abhebevorrichtungen werden insbesondere beim Kommissionieren von Waren eingesetzt, d.h. beim Zusammenstellen von auftragsspezifischen Teilmengen von Waren aus einer bereitgestellten Gesamtmenge von Waren.

Im Lebensmitteleinzelhandel sind dabei oftmals in Transportbehältern befindliche Waren von einer Vielzahl von Wareneingangspaletten gemäß den spezifischen Bestellungen einzelner Filialen auf Warenausgangspaletten zusammenzustellen und umzuladen (zu kommissionieren).

Das Kommissionieren erfolgt typischerweise in Zentrallagern unter Einsatz von menschlichen Kommissionierern und robotergestützten Kommissioniersystemen.

Insbesondere wenn es sich bei den zu kommissionierenden Waren um Obst- und Gemüse handelt, müssen dazu oftmals aufeinandergestapelte Transportbehälter (z.B. Kisten) von der Wareneingangspalette abgehoben (aufgenommen) und auf einer Warenausgangspalette wieder abgesetzt werden.

Die Transportbehälter werden dabei typischerweise in mehreren Lagen vertikal auf Paletten gestapelt, wobei innerhalb einer Lage mehrere Transportbehälter horizontal nebeneinander angeordnet sein können. Ein solcher Stapel kann eine Höhe von 2,5 m und mehr erreichen. Beim Anheben eines aufzunehmenden Transportbehälters ist besonders darauf zu achten, dass der Stapel nicht ganz oder teilweise umkippt. Vor diesem Hintergrund versucht man insbesondere zu verhindern, dass sich die Transportbehälter, die sich in der gleichen Ebene wie der aufzunehmende Transportbehälter befinden, aber (noch) nicht aufgenommen werden sollen, beim Abheben verschieben.

Die deutsche Patentschrift DE 420 6038 C2 beschreibt eine Umsetzvorrichtung mit einer Abhebevorrichtung zum Auflösen und Bilden von Stückgutstapeln, bei der zunächst die oberste Stückgutlage durch Vakuumgreifer angehoben wird und anschließend eine Abstützebene unter die angehobenen Stückgüter verfahren wird.

Die Patentanmeldung DE 101 02 929 A1 beschreibt ein Greifsystem mit einem Grundkörper und mit gegenüber dem Grundkörper horizontal verfahrbaren, die Stückgüterlage von zwei lateralen Seiten her greifenden Greiferbacken, wobei auf der der Stückgüterlage zugewandten Seite des Grundkörpers eine mit einem Unterdruckerzeuger verbundene Vakuumhaube vorhanden ist, über die die Oberseite der zu ergreifenden Stückgüterlage mit Unterdruck beaufschlagt werden kann.

Das deutsche Gebrauchsmuster DE 203 02 336 U1 offenbart eine Schwenkeinheit mit einem Auflageelement zur Aufnahme von Güterstapeln und einer mit dem Auflageelement verbundene Rückwand.

In dem Dokument DE 10 2022 103 519 A1 wird ein Greifer mit einem Traggestell beschrieben, an dem ein als Tragkamm mit Zinken (8) ausgeführter Träger (3) horizontal beweglich befestigt ist.

Die deutsche Patentanmeldung DE 10 2013 005 613 A1 offenbart einen Greiferkopf zum Erfassen von Stückgut mit einem Saugmittel oder einem Greifelement an seiner Unterseite, die je nach Beschaffenheit des Werkstücks ausgewählt werden können.

Der vorliegenden Erfindung liegt die Aufgabe zugrunde, eine Abhebevorrichtung bereitzustellen, die sich durch eine verbesserte Praxistauglichkeit auszeichnet, insbesondere im Hinblick auf
- zuverlässiges Verhindern des Umkippens des Stapels von aufeinandergestapelten Transportbehältern,
- kurze Taktzeiten,
- hohe Flexibilität in Bezug auf die Abmessungen der aufeinandergestapelten Transportbehälter,
- die Fähigkeit, auch beschädigte oder fehlerhaft gestapelte bzw. positionierte Transportbehälter sowie mehrere Lagen von aufeinandergestapelten Transportbehältern gleichzeitig aufzunehmen.

Gelöst wird diese Aufgabe durch die Abhebevorrichtung gemäß Anspruch 1, das Abhebesystem gemäß Anspruch 6 und das Verfahren zum Abheben von aufeinandergestapelten Transportbehältern gemäß Anspruch 8.

Die erfindungsgemäße Abhebevorrichtung, geeignet um aufeinandergestapelte Transportbehälter abzuheben und abzusetzen, umfasst:
- eine Greifvorrichtung, und
- eine Gegenhaltevorrichtung,
wobei,
- bei geeigneter Positionierung der Abhebevorrichtung ein aufzunehmender Transportbehälter oder Transportbehälterstapel zwischen der Greifvorrichtung und der Gegenhaltevorrichtung positionierbar ist, und
- die Gegenhaltevorrichtung an ihrer der Greifvorrichtung zugewandten Seite ein Kissen aufweist, welches durch Zufuhr eines Fluids expandierbar und durch Abfuhr des Fluids kontrahierbar ist.

Zum Abheben eines Transportbehälters (bzw. eines Transportbehälterstapels) wird die Abhebevorrichtung dabei derart positioniert, dass sich der Transportbehälter (bzw. der Transportbehälterstapel) in horizontaler Richtung zwischen der Greifvorrichtung und der Gegenhaltevorrichtung befindet.

Die Abhebevorrichtung wird dabei sinnvollerweise mit einem kontrahierten Kissen so positioniert, dass sich zunächst (in horizontaler Richtung) ein Spalt zwischen (dem kontrahierten Kissen) der Gegenhaltevorrichtung und dem aufzunehmenden Transportbehälter befindet.

Anschließend kann dieser Spalt durch das Expandieren des Kissens überwunden werden, sodass im expandierten Zustand des Kissens der aufzunehmende Transportbehälter und die Gegenhaltevorrichtung miteinander in Kontakt stehen und eine (im Wesentlichen horizontal orientierte) Druckkraft (Gegenhaltekraft) von dem Kissen der Gegenhaltevorrichtung auf den Transportbehälter ausgeübt wird.

Im Zuge des Abhebens des Transportbehälters tritt die Greifvorrichtung mit dem Transportbehälter in Kontakt und übt eine der Gegenhaltekraft entgegengesetzte (im Wesentlichen horizontal orientierte) Greifkraft auf din Transportbehälter aus.

Durch die Gegenhaltevorrichtung bzw. durch die von ihr auf den Transportbehälter ausgeübte Gegenhaltekraft kann dabei verhindert werden, dass sich der aufzunehmende Transportbehälter im Zuge des Abhebens in Folge der auf ihn ausgeübten Greifkraft verschiebt und z.B. vom Stapel fällt.

Insbesondere dann, wenn der Greifer beim Hochheben des Transportbehälters eine außermittige angreifende Hebekraft auf den Transportbehälter ausübt (z.B. wenn der Greifer nur auf einer Seite am Transportbehälter angreift), kann durch die Gegenhaltevorrichtung bzw. die durch Gegenhaltekraft der Transportbehälter in einer horizontalen Lage gehalten und somit eine Schieflage verhindert werden.

Die Erfindung basiert dabei auf der Erkenntnis, dass durch ein synergetisches Zusammenspiel der erfindungswesentlichen Merkmale eine Reihe von überraschenden Vorteilen realisiert werden können:
Durch das expandierbare Kissen können Ungenauigkeiten bzw. Abweichungen bezüglich der Positionierung, Dimensionierung und Form der Transportbehälter genauso wie Positionierungsabweichungen bedingt durch beschädigte oder "schief" gestapelte Transportbehälter kompensiert werden.

Das expandierbare Kissen bewirkt eine großflächige und gleichmäßige Kraftübertragung zwischen der Gegenhaltevorrichtung und dem Transportbehälter, wodurch der Transportbehälter selbst sowie die darin befindlichen Waren geschont werden. Vor diesem Hintergrund ist die Erfindung insbesondere zum Kommissionieren von empfindlichen Waren, wie beispielsweise Obst und Gemüse, geeignet.

Die von der Gegenhaltevorrichtung auf einen Transportbehälter ausgeübte Kraft kann über den Druck des in das Kissen eingeleitete Fluid exakt und einfach definiert und bestimmt werden. Auf diese Weise kann auch verhindert werden, dass eine zu große Gegenhaltkraft (Druckkraft) ausgeübt und der Transportbehälter in Richtung der Greifvorrichtung verschoben wird.

Dies kann insbesondere dann wichtig sein, wenn nicht eine komplette Lage von Transportbehältern gleichzeitig aufgenommen und abgehoben wird, sondern (zumindest) ein Transportbehälter in einer Lage zurückbleibt, während (mindestens) ein anderer Transportbehälter derselben Lage aufgenommen wird.

Denn wird in dieser Situation der auf dem Stapel verbleibende Transportbehälter beim Abheben des anderen Transportbehälters verschoben, besteht das Risiko, dass der verbleibende Transportbehälter von Stapel fällt.

Durch die erfindungsgemäße Abhebevorrichtung kann dieses Risiko minimiert werden. Somit wird ermöglicht, dass der verbleibende Stapel, auch nachdem einzelne Transportbehälter aufgenommen wurden, ohne großes "Umkipprisiko" (z.B. mittels eines führerlosen Transportfahrzeugs) verfahren werden kann, um an einem anderen Ort weiter entladen zu werden.

Die erfindungsgemäße Abhebevorrichtung kann also sowohl zum Einsatz kommen, um alle zwischen der Greifvorrichtung und der Gegenhaltevorrichtung, in einer gemeinsamen Lage angeordneten Transportbehälter auf einmal abzuheben, oder um nur einen (oder mehrere Transportbehälter) zwischen der Greifvorrichtung und der Gegenhaltevorrichtung, in einer gemeinsamen Lage angeordneten Transportbehälter abzuheben

Nachfolgend werden einige erfindungsgemäßen Merkmale und Begriffe detaillierter ausgeführt:
Unter einem Transportbehälter ist beispielsweise eine Kiste, ein Karton oder ein Tray zu verstehen. Ein Transportbehälter kann aus unterschiedlichen Materialien, beispielsweise aus Wellpappe, Kunststoff oder Metall ausgeführt sein.

Unter dem Abheben eines Transportbehälters bzw. eines Transportbehälterstapels ist ein Greifen und Anheben eines Transportbehälters bzw. eines Transportbehälterstapels zu verstehen.

Die Transportbehälter sind dabei in mehreren Lagen vertikal übereinander zu einem Stapel von Transportbehältern (Transportbehälterstapel) aufgestapelt. Sind mehrere Transportbehälter horizontal nebeneinander angeordnet, so bilden diese eine gemeinsame Lage aus. Es ist möglich, dass nur ein einziger Transportbehälter einer Lage abgehoben wird, während die übrigen Transportbehälter dieser Lage auf dem Stapel verbleiben. Es können aber auch mehrere horizontal nebeneinander angeordnete Transportbehälter gleichzeitig abgehoben werden.

Unter dem Absetzen eines Transportbehälters bzw. Transportbehälterstapels ist ein Ablegen eines zuvor abgehobenen Transportbehälters bzw. Transportbehälterstapels zu verstehen. Die abgesetzten Transportbehälter können dabei wieder aufeinander und/oder nebeneinander gestapelt werden.

Mit der Formulierung, dass ein aufzunehmender Transportbehälter zwischen der Greifvorrichtung und der Gegenhaltevorrichtung positionierbar ist, kommt zum Ausdruck, dass der Transportbehälter von der Greifvorrichtung und der Gegenhaltevorrichtung an zwei gegenüberliegenden Seiten gefasst werden kann.

Bei dem Fluid, das dem Kissen zugeführt bzw. aus diesem abgeführt werden kann, um das Kissen zu expandieren bzw. zu kontrahieren, kann es sich insbesondere um Druckluft handeln.

Das expandierte Kissen weist dabei eine größere Ausdehnung in Richtung der Greifvorrichtung auf als das kontrahierte Kissen. Durch das Expandieren des Kissens kann somit der Abstand zwischen der Greifvorrichtung und der Gegenhaltevorrichtung verkleinert werden.

Erfindungsgemäß weist die Greifvorrichtung mindesten einen Gabelzinken, der zum Aufnehmen eines Transportbehälters oder Transportbehälterstapels unter diesen geschoben werden kann, und/oder einen aktivierbaren Vakuumgreifer auf, mittels dem der aufzunehmende Transportbehälter (oder Transportbehälterstapel) an der Greifvorrichtung lösbar fixierbar ist.

Der mindestens eine Gabelzinken kann dabei auch als eine Aufnahmeplatte ausgeführt sein. Der (mindestens eine) Gabelzinken kann unbeweglich mit der übrigen Greifvorrichtung verbunden oder aber auch beweglich gegenüber dieser gelagert sein. Letzteres ermöglicht, dass der (mindestens eine) Gabelzinken mittels eines Aktuators unter den aufzunehmenden Transportbehälter oder Transportbehälterstapel verschoben werden kann, während die übrige Greifvorrichtung nicht bewegt wird.

Ein Vakuumgreifer (auch Vakuumheber oder Sauggreifer genannt) ist ein Gerät zum Heben von Objekten mit glatten Flächen mittels Unterdrucks. Das Wirkprinzip basiert auf einem Saugnapf, dessen Unterdruck durch eine Vakuumpumpe aufrechterhalten werden kann.

Unter einem aktivierten Vakuumgreifer ist vorliegend ein Vakuumgreifer zu verstehen, bei dessen Saugnapf ein Unterdruck aufrechterhalten wird, um ein Objekt zu greifen. Bei einem deaktivierten Vakuumgreifer hingegen herrscht Atmosphärendruck im Saugnapf.

Bei dieser bevorzugten Ausführungsform der Erfindung kann ein Transportbehälter somit durch den aktivierten Vakuumgreifer an der Greifvorrichtung fixiert werden.

Auf diese Weise können ausreichend Scherkräfte zwischen der Abhebevorrichtung und dem aufzuhebenden Transportbehälter übertragen werden, damit dieser angehoben werden kann.

Besonders bevorzugt weist die Greifvorrichtung dabei mindesten einen Gabelzinken auf, der beweglich gegenüber der übrigen Greifvorrichtung gelagert ist und nach dem Anheben des Transportbehälters mittels eines Aktuators unter den Transportbehälter verschoben werden kann.

Eine besonders flexibel einsetzbare Abhebevorrichtung lässt sich realisieren, indem die Greifvorrichtung gegenüber der Gegenhaltevorrichtung beweglich ist.

Auf diese Weise wird ermöglicht, dass die Abhebevorrichtung mit unterschiedlich dimensionierten Transportbehältern verwendet werden kann, indem der Abstand zwischen der Greifvorrichtung und der Gegenhaltevorrichtung entsprechend zueinander eingestellt wird.

Zudem kann die Gegenhaltevorrichtung somit exakt gegenüber der Greifvorrichtung am aufzunehmenden Transportbehälter positioniert werden. Auf diese Weise können die auf die Gegenhaltevorrichtung einwirkende Momente und Kräfte klein gehalten werden, was den Einsatz einer relativ klein dimensionierten Gegenhaltevorrichtung ermöglicht.

Dies kann insbesondere realisiert werden, indem die Abhebevorrichtung ein Vorrichtungsgestell aufweist, wobei
- die Greifvorrichtung (5), insbesondere entlang zweier oder dreier Achsen, gegenüber dem Vorrichtungsgestell (4) beweglich gelagert ist, und/oder
- die Gegenhaltevorrichtung (6), insbesondere entlang zweier oder dreier Achsen, gegenüber dem Vorrichtungsgestell (4) beweglich gelagert ist.

Die Erfindung manifestiert sich weiterhin in einem Abhebesystem, umfassend eine erfindungsgemäße Abhebevorrichtung und einen Roboter, wobei die Abhebevorrichtung als ein Manipulator des Roboters ausgeführt ist.

Unter einem Manipulator wird dabei im Einklang mit dem branchenüblichen Verständnis ein Gerät verstanden, das die physikalische Interaktion eines Roboters mit dessen Umgebung ermöglicht.

In besonders vorteilhafter Weise ist der Roboter dabei als Portalroboter oder als Industrieroboter ausgeführt.

Insbesondere dann, wenn der Roboter als Portalroboter ausgeführt ist, lässt sich ein System realisieren, bei dem die zu kommissionierenden Transportbehälter in einem Mittelgang auf Wareneingangspaletten bereitgestellt werden und die Warenausgangspaletten, auf denen die zu kommissionierenden Transportbehälter auftragsspezifisch aufgestapelt werden sollen, zu beiden Seiten des Mittelgangs in Seitengängen angeordnet sind. Der Portalroboter ist dabei derart ausgelegt und angeordnet, dass er mit seinem Manipulator, also der Abhebevorrichtung, sowohl die Wareneingangspaletten im Mittelgang als auch die seitlich dazu angeordneten Warenausgangspaletten in den Seitengängen erreichen kann.

Es hat sich herausgestellt, dass dieser Systemaufbau ein besonders effizientes Kommissionieren von Waren ermöglicht.

Die Wareneingangspaletten und/oder die Warenausgangspaletten können dabei durch verfahrbare, führerlose Transportfahrzeuge (auch fahrerlose Transportfahrzeuge, FTF, Automated Guided Vehicle oder AGV genannt) bereitgestellt werden.

Weiterhin manifestiert sich die Erfindung in dem Verfahren zum Abheben von aufeinandergestapelten Transportbehältern mittels einer erfindungsgemäßen Abhebevorrichtung mit den folgenden Schritten:
A) Positionieren der Abhebevorrichtung dergestalt, dass ein aufzunehmender Transportbehälter oder Transportbehälterstapel zwischen der Greifvorrichtung und der Gegenhaltevorrichtung positioniert ist, wobei das Kissen der Gegenhaltevorrichtung kontrahiert ist und zwischen der Gegenhaltevorrichtung und dem abzuhebenden Transportbehälter ein Spalt ausgebildet ist,
B) Expandieren des Kissens der Gegenhaltevorrichtung, wobei das expandierte Kissen den Spalt überwindet und mit dem abzuhebenden Transportbehälter oder Transportbehälterstapel in Kontakt tritt, sodass eine Druckkraft von der Gegenhaltevorrichtung auf den abzuhebenden Transportbehälter oder Transportbehälterstapel ausgeübt wird,
C) Anheben der Abhebevorrichtung mitsamt dem abzuhebenden Transportbehälter oder Transportbehälterstapel.

Es ist dabei auch denkbar, dass das Kissen nur solange expandiert bleibt, bis der abzuhebende Transportbehälter vollständig und sicher von der Greifvorrichtung gegriffen wurde, beispielsweise indem ein Gabelzinken der Greifvorrichtung unter den aufzuhebenden Transportbehälter geschoben wurde. Anschließend kann das Kissen kontrahiert werden und der aufzunehmende Transportbehälter mitsamt der Abhebevorrichtung (weiter) hochgehoben werden. Dies ist insbesondere dann sinnvoll, wenn nicht alle zwischen der Greifvorrichtung und der Gegenhaltevorrichtung, in einer gemeinsamen Lage angeordneten Transportbehälter auf einmal abgehoben werden sollen, sondern zumindest der Transportbehälter, der mit dem expandierten Kissen in Kontakt stand, zunächst noch auf dem Stapel verbleiben soll.

Vorteilhafterweise ist dabei vorgesehen, dass
- die Greifvorrichtung mindestens einen aktivierbaren Vakuumgreifer umfasst, mittels dem der aufzunehmende Transportbehälter oder Transportbehälterstapel an der Greifvorrichtung lösbar fixierbar ist, und
- das Positionieren der Abhebevorrichtung gemäß Schritt A) dergestalt erfolgt, dass der mindestens eine Vakuumgreifer der Greifvorrichtung in Kontakt mit dem aufzunehmenden Transportbehälter oder Transportbehälterstapel steht und anschließend der mindestens eine Vakuumgreifer aktiviert wird, damit der aufzunehmende Transportbehälter oder Transportbehälterstapel lösbar an der Greifvorrichtung fixiert ist.

Weiterhin kann in vorteilhafter Weise vorgesehen sein, dass
- die Greifvorrichtung der Abhebevorrichtung mindesten einen Gabelzinken aufweist, der beweglich gegenüber der übrigen Greifvorrichtung gelagert ist und zum Aufnehmen eines Transportbehälters oder Transportbehälterstapels unter diesen geschoben werden kann, und
- im Anschluss an Schritt C) erfolgt:
   D) Schieben des mindestens einen Gabelzinken der Greifvorrichtung unter den abgehobenen Transportbehälter oder Transportbehälterstapel.

Auf diese Weise kann das Risiko eines Umkippens des Stapels noch weiter reduziert werden, da der mindestens eine Gabelzinken nicht unter den aufzunehmenden Transportbehälter geschoben werden muss, während dieser noch mit seinem Eigengewicht (bzw. sein Eigengewicht und dem Gewicht der auf ihm gestapelten weiteren Transportbehälter) auf dem darunter angeordneten Transportbehälter ruht.

Somit kann verhindert werden, dass der aufzunehmende Transportbehälter durch ein erzwungenes Hereinzwängen des Gabelzinken verschoben wird und/oder ins Wanken gerät und umkippt. Außerdem kann das Risiko der Beschädigung des Transportbehälters bzw. des Inhalts weiter reduziert werden.

Ganz besonders bevorzugt wird dabei der abzuhebende Transportbehälter oder Transportbehälterstapel auf einem führerlosen Transportfahrzeug bereitgestellt wird.

Die aufeinandergestapelten Transportbehälter können dabei auf einer Wareneingangspalette gestapelt sein, die beim Kommissionieren mittels der Abhebevorrichtung entladen werden soll, wobei die aufgenommenen Transportbehälter auf Warenausgangspaletten abgeladen werden sollen.

Das führerlose Transportfahrzeug mit den aufeinandergestapelten Transportbehältern kann dabei der Abhebevorrichtung folgen und somit "hinterherfahren", um den Kommissioniervorgang möglichst effizient zu gestalten.

Dabei ist es der Prozessstabilität zuträglich, dass es das erfindungsgemäße Verfahren ermöglicht, dass die aufeinander gestapelten Transportbehälter beim Aufnehmen und Entfernen nicht verschoben werden. Denn ein Stapel mit verschobenen Transportbehältern weist insbesondere beim Anfahren oder Stoppen des den Stapel bereitstellenden führerlosen Transportfahrzeugs ein hohes Risiko auf, ins Wanken zu geraten und zu kippen.

Gemäß einer weiteren bevorzugten Ausführungsform des erfindungsgemäßen Verfahrens erfolgt das Positionieren der Abhebevorrichtung gemäß Schritt A) dergestalt, dass das expandierte Kissen der Gegenhaltevorrichtung im unteren Drittel des abzuhebenden Transportbehälters oder im unteren Drittel des untersten Transportbehälters des Transportbehälterstapels mit diesem in Kontakt tritt.

Auf diese Weise kann erreicht werden, dass die Gegenhaltekraft der Gegenhaltevorrichtung in der Nähe des stabilen Bodenbereichs des Transportbehälters in diesen eingeleitet werden kann. Somit können Beschädigungen des Transportbehälters und der darin befindlichen Waren verhindert werden.

Eine weitere bevorzugten Ausführungsform des erfindungsgemäßen Verfahrens ist dadurch gekennzeichnet, dass
- die Abhebevorrichtung ein Vorrichtungsgestell aufweist,
- die Greifvorrichtung, insbesondere entlang zweier oder dreier Achsen, gegenüber dem Vorrichtungsgestell beweglich gelagert ist, und
- die Gegenhaltevorrichtung, insbesondere entlang zweier oder dreier Achsen, gegenüber dem Vorrichtungsgestell beweglich gelagert ist,
und gemäß Schritt C das Anheben der Abhebevorrichtung mitsamt dem abzuhebenden Transportbehälter oder Transportbehälterstapel erfolgt, indem
- die Greifvorrichtung mitsamt dem abzuhebenden Transportbehälter gegenüber dem Vorrichtungsgestell angehoben wird und
- die Gegenhaltevorrichtung gegenüber dem Vorrichtungsgestell an der Position verharrt, in der gemäß Schritt B das Expandieren des Kissens der Gegenhaltevorrichtung erfolgt ist.

Auf diese Weise kann das Abheben der abzuhebenden Transportbehälter bei einer unbeweglich in seiner "Expansionsposition" verharrenden Gegenhaltevorrichtung erfolgen, was insbesondere dann, wenn nur einzelne Transportbehälter und keine komplette Lage von Transportbehältern von einer Palette abgehoben werden sollen, dazu beitragen kann, den auf der Palette verbleibenden Stapel zu stabilisieren und gegen ein Umkippen zu sichern.

Nachfolgend werden Ausführungsbeispiele der Erfindung anhand der Zeichnung näher erläutert. Dabei zeigt
- Fig. 1A & 1B: ein erstes Ausführungsbeispiel eines erfindungsgemäßen Abhebesystems mit kontrahiertem Kissen (Figur 1A) bzw. expandiertem Kissen (Figur 1B),
- Fig. 2A - 2E: ein zweites Ausführungsbeispiel eines erfindungsgemäßen Abhebesystems zu verschiedenen Zeitpunkten während des Durchführens eines erfindungsgemäßen Verfahrens,
- Fig. 3: ein Prozessflussdiagramm eines erfindungsgemäßen Verfahrens,
- Fig. 4: ein drittes Ausführungsbeispiel eines erfindungsgemäßen Abhebesystems in einer Draufsicht, und
- Fig. 5A & 5B: ein viertes Ausführungsbeispiel eines erfindungsgemäßen Abhebesystems zu verschiedenen Zeitpunkten während des Durchführens eines erfindungsgemäßen Verfahrens.

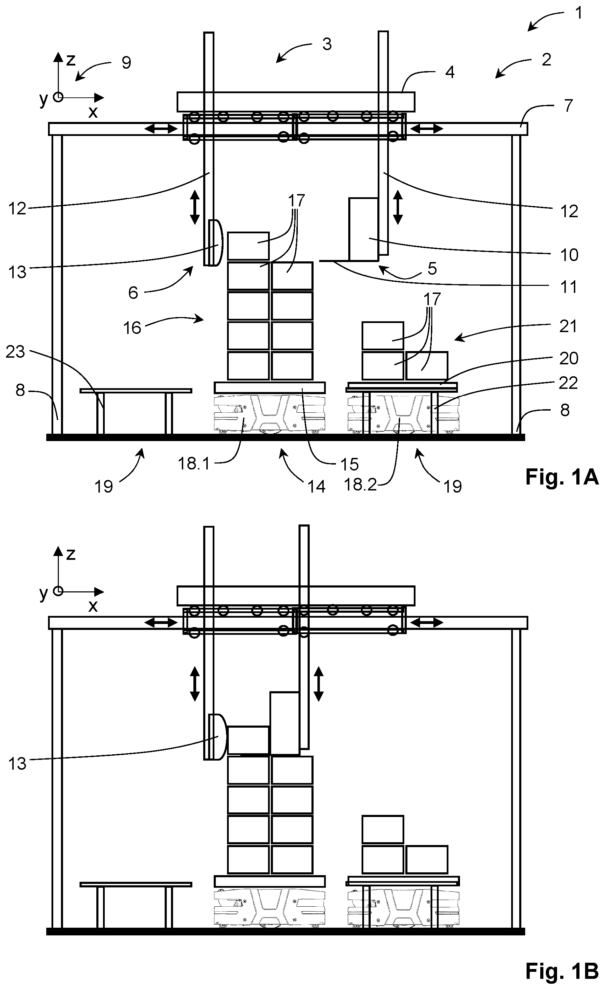

Die Figuren 1A und 1B zeigen ein erstes Ausführungsbeispiel eines erfindungsgemäßen Abhebesystems 1 mit kontrahiertem Kissen (Figur 1A) bzw. expandiertem Kissen (Figur 1B).

Das Abhebesystem 1 umfasst einen Portalroboter 2 und eine als Manipulator des Portalroboters 2 ausgeführte Abhebevorrichtung 3 mit einem Vorrichtungsgestell 4, einer Greifvorrichtung 5 und einer Gegenhaltevorrichtung 6.

Die Abhebevorrichtung 3 ist mitsamt dem Vorrichtungsgestell 4 entlang von Schienen 7, die auf Stützen 8 ruhen, entlang der x-Achse des Koordinatensystems 9 verfahrbar.

Weiterhin sind die Greifvorrichtung 5 und die Gegenhaltevorrichtung 6 jeweils mit Freiheitsgraden entlang der x-, y- und z-Achse (des Koordinatensystems 9) beweglich gegenüber dem Vorrichtungsgestell 4 gelagert und können mittels geeigneter Aktuatoren (nicht dargestellt) entlang ihrer Freiheitsgrade bewegt werden.

Die Greifvorrichtung 5 umfasst einen Greifer 10 mit einem Ablageblech 11 und eine Führungsstange 12, entlang derer der Greifer 10 entlang der z-Achse bewegt werden kann.

Die Gegenhaltevorrichtung 6 weist ebenfalls eine Führungsstange 12 und ein an der der Greifvorrichtung 6 zugewandten Seite angeordnetes Kissen 13 auf, welches durch Zufuhr von Druckluft expandierbar und durch Abfuhr von Luft kontrahierbar ist.

In Figur 1A ist das Kissen 13 in einem zumindest teilweise kontrahierten Zustand darstellt, in Figur 1B in einem (zumindest teilweise) expandierten Zustand. Dabei ist augenscheinlich, dass das expandierte Kissen 13 eine größere Ausdehnung in Richtung der Greifvorrichtung 5 aufweist als das kontrahierte Kissen 13.

Unter der Abhebevorrichtung 3 befindet sich in den Figuren 1A und 1B in einem Mittelgang 14 auf einer Wareneingangspalette 15 ein Wareneingangsstapel 16 aus aufgestapelten Transportbehältern 17 angeordnet. Die Wareneingangspalette 15 wird dabei auf einem ersten führerlosen Transportfahrzeug 18.1 bereitgestellt.

Neben dem Wareneingangsstapel 16 ist in einem Seitengang 19 auf einer ersten Warenausgangspalette 20 ein erster Warenausgangsstapel 21 aus Transportbehältern 17 angeordnet. Die erste Warenausgangspalette 20 wurde dabei mittels eines zweiten führerlosen Transportfahrzeugs 18.2 auf einem unterfahrbaren ersten Palettenständer 22 bereitgestellt. Auf der anderen Seite des Wareneingangsstapels 16 in einem weiteren Seitengang 19 ist ein zweiter unterfahrbarer Palettenständer 23 angeordnet.

Der Portalroboter 2 ist dabei derart ausgelegt und angeordnet, dass er mit seinem Manipulator, also der Abhebevorrichtung 3, sowohl die Wareneingangspalette 15 im Mittelgang 14 als auch die seitlich dazu angeordneten Warenausgangspalette 20 in dem Seitengängen 19 erreichen kann.

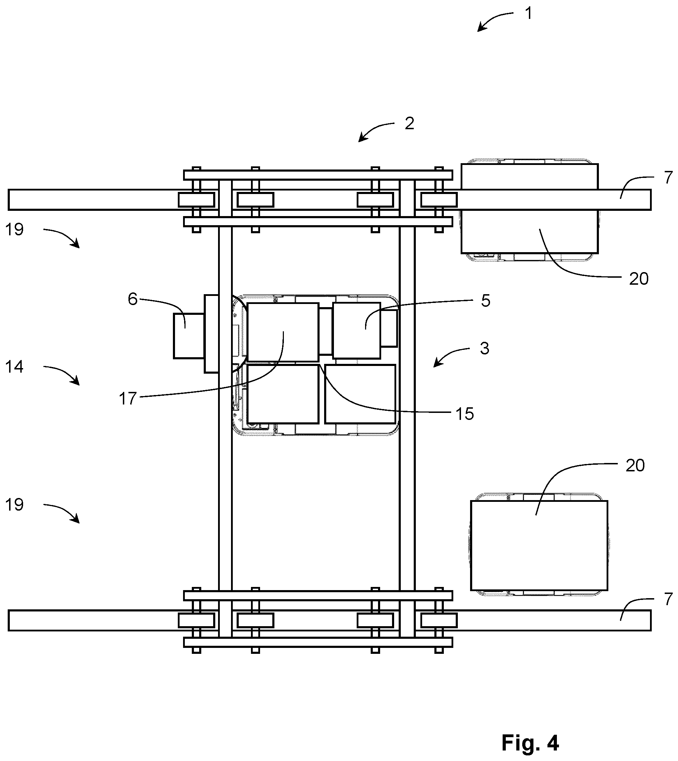

Ein dem sehr ähnliches weiteres Ausführungsbeispiel eines erfindungsgemäßen Abhebesystems 1 mit einem Portalroboter 2, der Wareneingangspaletten 15 in einem Mittelgang 14 und Warenausgangspaletten 20 in Seitengängen 19 erreichen kann, ist grob schematisch in einer Draufsicht in Figur 4 dargestellt.

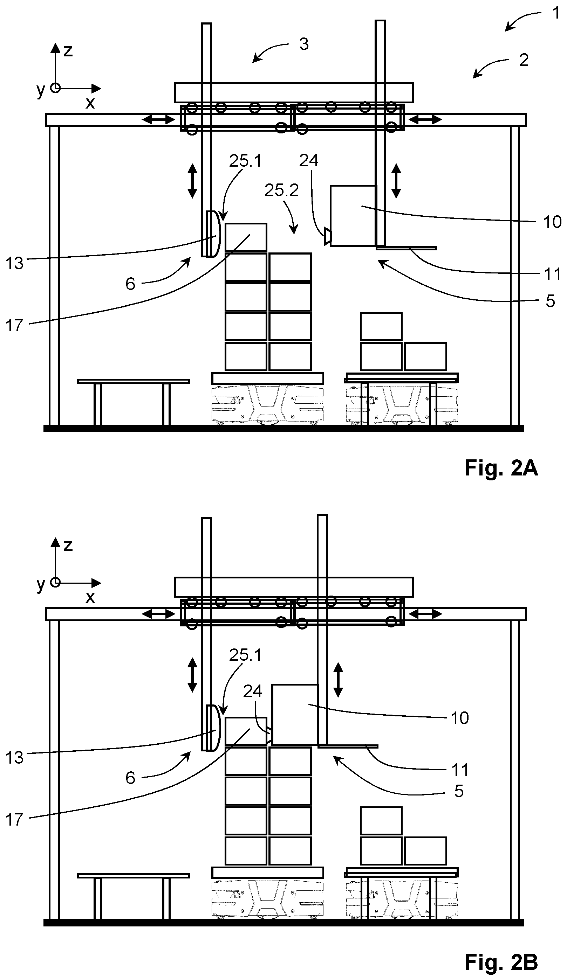

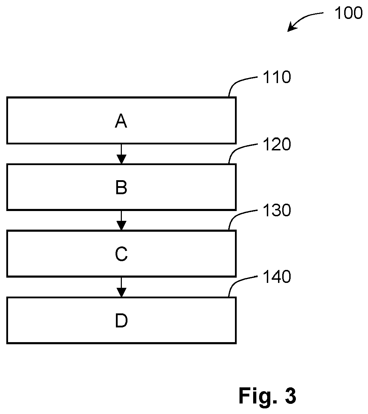

Die Figuren 2A bis 2E zeigen ein weiteres Ausführungsbeispiel eines erfindungsgemäßen Abhebesystems 1 zu verschiedenen Zeitpunkten während der Durchführung des in Figur 3 skizzierten erfindungsgemäßen Verfahrens 100.

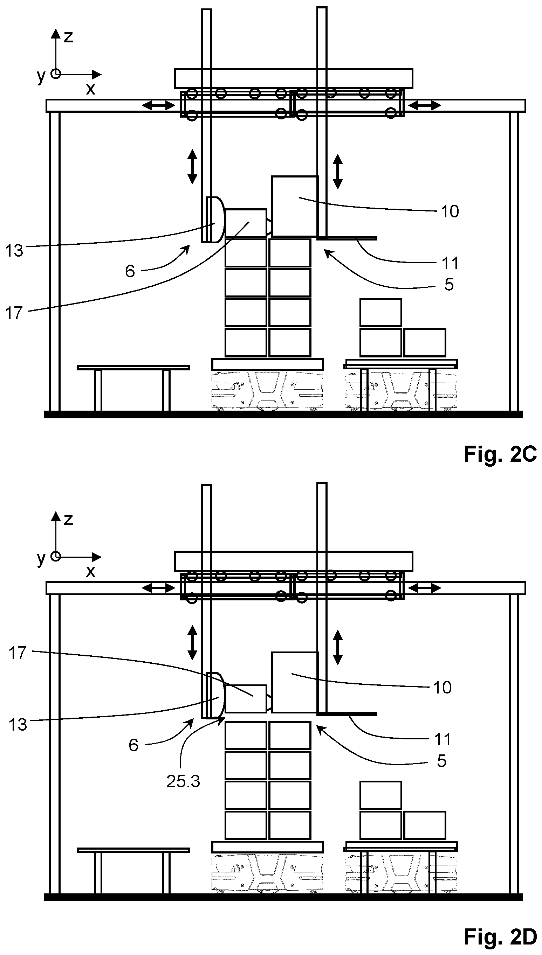

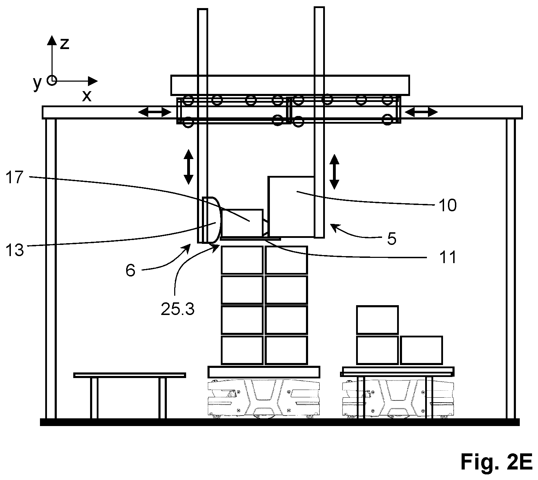

Zunächst werden die wesentlichen Unterschiede zwischen dem in den Figuren 1A und 1B dargestellten Ausführungsbeispiel und dem Ausführungsbeispiel gemäß Figur 2 kurz erläutert, bevor anschließend auf die einzelnen Schritte des erfindungsgemäßen Verfahrens 100 näher eingegangen wird.

Das Ausführungsbeispiel gemäß Figur 2 unterscheidet sich vom Ausführungsbeispiel gemäß Figur 1 im Wesentlichen durch die Ausgestaltung der Greifvorrichtung 5. Die Greifvorrichtung 5 des Ausführungsbeispiels gemäß Figur 2 umfasst einen Greifer 10 mit einem Vakuumgreifer 24 und ein gegenüber dem Greifer 10 entlang der x-Achse verschiebbar gelagertes Ablageblech 11.

Der Vakuumgreifer 24 ist auf der der Gegenhaltevorrichtung 6 zugewandten Seite der Greifvorrichtung 5 angeordnet.

Das Ablageblech 11 kann mittels eines Aktuators (nicht dargestellt) gegenüber dem Greifer 10 verschoben werden.

Zunächst wird wie in Figur 2A dargestellt gemäß Schritt A) (110) des erfindungsgemäßen Verfahrens 100 die Abhebevorrichtung 3 dergestalt positioniert, dass der aufzunehmende Transportbehälter 17 zwischen dem Greifer 5 und der Gegenhaltevorrichtung 6 positioniert (angeordnet) ist, sodass die Greifvorrichtung 5 und die Gegenhaltevorrichtung 6 den abzuhebenden Transportbehälter 17 an zwei gegenüberliegenden Seiten einfassen. Das Kissen 13 der Gegenhaltevorrichtung 6 ist kontrahiert und zwischen der Gegenhaltevorrichtung 6 und dem abzuhebenden Transportbehälter 17 sowie der Greifvorrichtung 5 und dem Transportbehälter 17 ist jeweils ein Spalt 25.1, 25.2 ausgebildet. Anschließend wird die Greifvorrichtung 5 so nahe an den abzuhebenden Transportbehälter 17 herangefahren, dass der Vakuumgreifer 24 der Greifvorrichtung 5 mit dem Transportbehälter 17 in Kontakt steht. Daraufhin wird der Vakuumgreifer 24 aktiviert und ein Unterdruck im Saugnapf des Vakuumgreifers 24 aufgebaut, sodass der aufzunehmende Transportbehälter 17 lösbar an der Greifvorrichtung 5 fixiert ist. Dieser Zustand ist in Figur 2B dargestellt.

Daraufhin wird gemäß Schritt B) (110) das Kissen 13 der Gegenhaltevorrichtung 6 expandiert, indem Druckluft in das Kissen 13 zugeführt wird. Das in Figur 2C dargestellte expandierte Kissen 13 überwindet den zuvor zwischen der Gegenhaltevorrichtung 6 und dem Transportbehälter 17 bestehenden Spalt 24.1, tritt mit dem abzuhebenden Transportbehälter 17 in Kontakt und bewirkt, dass eine Druckkraft (Gegenhaltekraft) von der Gegenhaltevorrichtung 6 auf den abzuhebenden Transportbehälter 17 ausgeübt wird.

Anschließend wird die Abhebevorrichtung 4 mitsamt dem abzuhebenden Transportbehälter 17 gemäß Schritt C) (130) angehoben, sodass sich, wie in Figur 2D dargestellt, ein Spalt 25.3 zwischen dem abgehobenen Transportbehälter 17 und dem verbleibenden Wareneingangsstapel 16 ausbildet.

Daraufhin wird gemäß Schritt D) (140) das Ablageblech 11 der Greifvorrichtung 5 mittels eines Aktuators (nicht dargestellt) entlang der x-Achse unter den abgehobenen Transportbehälter 17 geschoben. Figur 2E zeigt das unter den Transportbehälter 17 geschobene Ablageblech 11. In diesem Zustand kann der Vakuumgreifer 24 deaktiviert werden und der aufgenommene Transportbehälter 17 (vollständig) auf dem Ablageblech abgelegt werden.

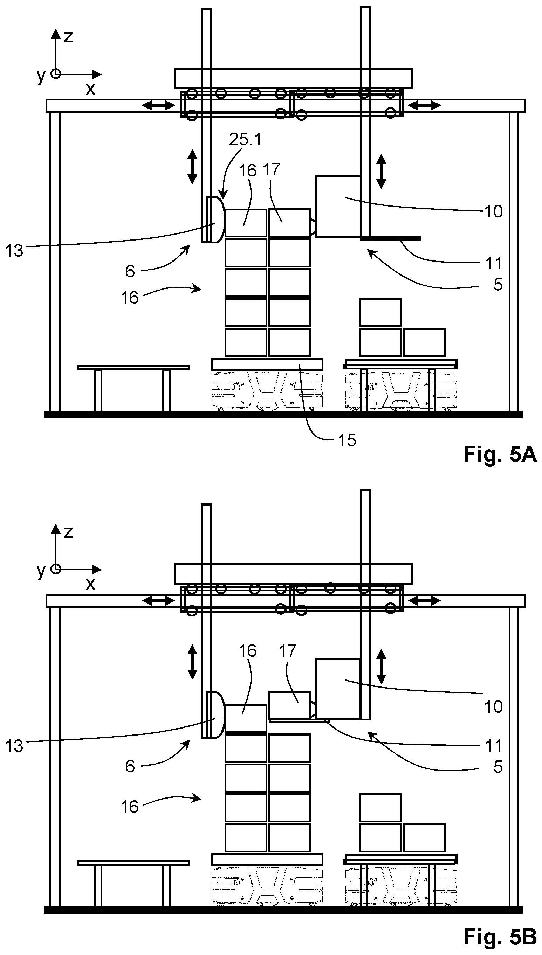

Die Figuren 5A und 5B zeigen ein weiteres Ausführungsbeispiel eines erfindungsgemäßen Abhebesystems 1 zu zwei verschiedenen Zeitpunkten während der Durchführung des erfindungsgemäßen Verfahrens 100.

Das Ausführungsbeispiel gemäß den Figuren 5A und 5B bzw. das hier illustrierte erfindungsgemäße Verfahren 100 unterscheidet sich vom dem in den Figuren 2A bis 2E illustrierten Verfahren im Wesentlichen dadurch, wie das Anheben des abzuhebenden Transportbehälters 17 erfolgt, da keine komplette Lage von Transportbehältern, sondern nur ein Transportbehälter 17 abgehoben wird, während ein anderer Transportbehälter derselben Lage mit dem übrigen Wareneingangsstapel 16 auf der Wareneinganspalette 15 verbleiben soll. Um Wiederholungen zu vermeiden wird nachfolgend nur auf die wesentlichen Unterschiede zum Ausführungsbeispiel gemäß der Figuren 2A bis 2E bzw. zum vorangehend erläuterten Verfahren 100 eingegangen. Identische Bezugszeichen bezeichnen dabei identische oder ähnliche Komponenten bzw. Verfahrensschritte.

Figur 5A zeigt das Abhebesystem 1 zu einem Zeitpunkt nachdem gemäß Schritt A die Greifvorrichtung 4 mittels des Vakuumgreifers 24 lösbar an dem aufzunehmenden Transportbehälter 17 fixiert ist und nachdem gemäß Schritt B des Verfahrens 100 das Expandieren des Kissens 13 der Gegenhaltevorrichtung 6 erfolgt ist. Das expandierte Kissen 13 hat dabei den (ursprünglichen) Spalt 25.1 überwunden und tritt mit dem Wareneingangsstapel 16 in Kontakt, sodass eine Druckkraft von der Gegenhaltevorrichtung 6 auf den Wareneingangsstapel 16 ausgeübt wird.

Anschließend erfolgt wie in Figur 5B dargestellt gemäß Schritt C das Anheben (130) der Abhebevorrichtung 3 mitsamt dem abzuhebenden Transportbehälter 17. Hierzu wird die Greifvorrichtung 5 mitsamt dem abzuhebenden Transportbehälter 17 gegenüber dem Vorrichtungsgestell 4 angehoben, während die Gegenhaltevorrichtung 6 gegenüber dem Vorrichtungsgestell 4 an der Position verharrt, in der gemäß Schritt B das Expandieren des Kissens 13 der Gegenhaltevorrichtung 6 erfolgt ist. Das Kissen 13 bewegt sich somit beim Anheben des abzuhebenden Transportbehälters 17 nicht gegenüber dem übrigen Wareneingangsstapel 16, wodurch dieser stabilisiert wird und wirksam gegen ein Umkippen gesichert werden kann.

### Bezugszeichenliste

| | |
|---|---|
| Abhebesystem | 1 |
| Portalroboter | 2 |
| Abhebevorrichtung | 3 |
| Vorrichtungsgestell | 4 |
| Greifvorrichtung | 5 |
| Gegenhaltevorrichtung | 6 |
| Schienen | 7 |
| Stützen | 8 |
| Koordinatensystem | 9 |
| Greifer | 10 |
| Ablageblech | 11 |
| Führungsstange | 12 |
| Kissen | 13 |
| Mittelgang | 14 |
| Wareneingangspalette | 15 |
| Wareneingangsstapel | 16 |
| Transportbehälter | 17 |
| Erstes führerloses Transportfahrzeug | 18.1 |
| Zweites führerloses Transportfahrzeug | 18.2 |
| Seitengang | 19 |
| erste Warenausgangspalette | 20 |
| erster Warenausgangsstapel | 21 |
| ersten Palettenständer | 22 |
| zweiter Palettenständer | 23 |
| Vakuumgreifer | 24 |
| Spalt | 25.1, 25.2, 25.3 |

## Patentansprüche

1. Abhebevorrichtung (3), geeignet um aufeinandergestapelte Transportbehälter (17) abzuheben und abzusetzen, umfassend
- eine Greifvorrichtung (5), und
- eine Gegenhaltevorrichtung (6),
wobei,
- bei geeigneter Positionierung der Abhebevorrichtung (3) ein aufzunehmender Transportbehälter (17) oder Transportbehälterstapel zwischen der Greifvorrichtung (5) und der Gegenhaltevorrichtung (6) positionierbar ist, und
- die Gegenhaltevorrichtung (6) an ihrer der Greifvorrichtung (5) zugewandten Seite ein Kissen (13) aufweist, welches durch Zufuhr eines Fluids expandierbar und durch Abfuhr des Fluids kontrahierbar ist,
**dadurch gekennzeichnet, dass**
- die Greifvorrichtung (5) mindesten einen Gabelzinken aufweist, der zum Aufnehmen eines Transportbehälters (17) oder Transportbehälterstapels unter diesen geschoben werden kann, und/oder
- die Greifvorrichtung (5) mindestens einen aktivierbaren Vakuumgreifer (24) umfasst, mittels dem der aufzunehmende Transportbehälter (17) oder Transportbehälterstapel an der Greifvorrichtung (5) lösbar fixierbar ist.

2. Abhebevorrichtung (3) nach Anspruch 1, wobei
- die Greifvorrichtung (5) gegenüber der Gegenhaltevorrichtung (6) beweglich ist.

3. Abhebevorrichtung (3) nach einem der voranstehenden Ansprüche mit einem Vorrichtungsgestell (4), wobei
- die Greifvorrichtung (5), insbesondere entlang zweier oder dreier Achsen, gegenüber dem Vorrichtungsgestell (4) beweglich gelagert ist, und/oder
- die Gegenhaltevorrichtung (6), insbesondere entlang zweier oder dreier Achsen, gegenüber dem Vorrichtungsgestell (4) beweglich gelagert ist.

4. Abhebesystem (1) umfassend eine Abhebevorrichtung (3) nach einem der voranstehenden Ansprüche und einen Roboter (2), wobei die Abhebevorrichtung (4) als ein Manipulator des Roboters ausgeführt ist.

5. Abhebesystem (1) nach Anspruch 4, wobei der Roboter (2) als Portalroboter (2) oder als Industrieroboter ausgeführt ist.

6. Verfahren (100) zum Abheben von aufeinandergestapelten Transportbehältern (17) mittels einer Abhebevorrichtung (3) nach einem der Ansprüche 1 bis 3 mit den folgenden Schritten:
A) Positionieren (110) der Abhebevorrichtung (3) dergestalt, dass ein abzuhebender Transportbehälter (17) oder Transportbehälterstapel zwischen der Greifvorrichtung (5) und der Gegenhaltevorrichtung (6) positioniert ist, wobei das Kissen (13) der Gegenhaltevorrichtung (6) kontrahiert ist und zwischen der Gegenhaltevorrichtung (6) und dem abzuhebenden Transportbehälter (17) ein Spalt (25.1) ausgebildet ist,
B) Expandieren (120) des Kissens (13) der Gegenhaltevorrichtung (6), wobei das expandierte Kissen (13) den Spalt (25.1) überwindet und mit dem abzuhebenden Transportbehälter (17) oder Transportbehälterstapel in Kontakt tritt, sodass eine Druckkraft von der Gegenhaltevorrichtung (6) auf den abzuhebenden Transportbehälter (17) oder Transportbehälterstapel ausgeübt wird, und
C) Anheben (130) der Abhebevorrichtung (3) mitsamt dem abzuhebenden Transportbehälter (17) oder Transportbehälterstapel.

7. Verfahren (100) zum Abheben von aufeinandergestapelten Transportbehältern (17) gemäß Anspruch 6, wobei
- die Greifvorrichtung (3) gemäß Anspruch 3 mindestens einen aktivierbaren Vakuumgreifer (24) umfasst, mittels dem der aufzunehmende Transportbehälter (17) oder Transportbehälterstapel an der Greifvorrichtung (5) lösbar fixierbar ist, und
- das Positionieren (110) der Abhebevorrichtung (3) gemäß Schritt A) dergestalt erfolgt, dass der mindestens eine Vakuumgreifer (24) der Greifvorrichtung (5) in Kontakt mit dem aufzunehmenden Transportbehälter (17) oder Transportbehälterstapel steht und anschließend der mindestens eine Vakuumgreifer (24) aktiviert wird, damit der aufzunehmende Transportbehälter (17) oder Transportbehälterstapel lösbar an der Greifvorrichtung (5) fixiert ist.

8. Verfahren (100) zum Abheben von aufeinandergestapelten Transportbehältern (17) gemäß Anspruch 7, wobei
- die Greifvorrichtung (5) der Abhebevorrichtung (3) gemäß Anspruch 2 mindesten einen Gabelzinken aufweist, der beweglich gegenüber der übrigen Greifvorrichtung (5) gelagert ist und zum Aufnehmen eines Transportbehälters (17) oder Transportbehälterstapels unter diesen geschoben werden kann, und
- im Anschluss an Schritt C) erfolgt:
D) Schieben (140) des mindestens einen Gabelzinken der Greifvorrichtung (5) unter den abgehobenen Transportbehälter (17) oder Transportbehälterstapel.

9. Verfahren (100) zum Abheben von aufeinandergestapelten Transportbehältern (17) gemäß einem der Ansprüche 6 bis 8, wobei der abzuhebende Transportbehälter (17) oder Transportbehälterstapel auf einem führerlosen Transportfahrzeug (18.1, 18.2) bereitgestellt wird.

10. Verfahren (100) zum Abheben von aufeinandergestapelten Transportbehältern (17) gemäß einem der Ansprüche 6 bis 9, wobei das Positionieren (110) der Abhebevorrichtung (3) gemäß Schritt A) dergestalt erfolgt, dass das expandierte Kissen (13) der Gegenhaltevorrichtung (6) im unteren Drittel des abzuhebenden Transportbehälters (17) oder im unteren Drittel des untersten Transportbehälters des Transportbehälterstapels mit diesem in Kontakt tritt.

11. Verfahren (100) zum Abheben von aufeinandergestapelten Transportbehältern (17) gemäß einem der Ansprüche 6 bis 10,
wobei
- die Abhebevorrichtung (3) ein Vorrichtungsgestell (4) aufweist,
- die Greifvorrichtung (5), insbesondere entlang zweier oder dreier Achsen, gegenüber dem Vorrichtungsgestell (4) beweglich gelagert ist, und
- die Gegenhaltevorrichtung (6), insbesondere entlang zweier oder dreier Achsen, gegenüber dem Vorrichtungsgestell (4) beweglich gelagert ist,
und das Anheben (130) der Abhebevorrichtung (3) mitsamt dem abzuhebenden Transportbehälter (17) oder Transportbehälterstapel erfolgt, indem
- die Greifvorrichtung (5) mitsamt dem abzuhebenden Transportbehälter (17) gegenüber dem Vorrichtungsgestell (4) angehoben wird und
- die Gegenhaltevorrichtung (6) gegenüber dem Vorrichtungsgestell (4) an der Position verharrt, in der das Expandieren (120) des Kissens (13) der Gegenhaltevorrichtung (6) erfolgt ist.
